# NEUE EUROPÄISCHE PATENTSCHRIFT

(11) **EP 1 202 885 B2**
(45) Veröffentlichungstag und Bekanntmachung des Hinweises auf die Entscheidung über den Einspruch: **05.05.2010**
(45) Hinweis auf die Patenterteilung: 25.05.2005
(21) Anmeldenummer: 00952909.0
(22) Anmeldetag: 05.07.2000
(51) Int. Cl.: B60S 1/08

(54) **SENSOR ZUM OPTISCHEN ERFASSEN VON FREMDKÖRPERN, INSBESONDERE REGENTROPFEN, AUF EINER SCHEIBE**
SENSOR FOR OPTICALLY DETECTING FOREIGN BODIES, PARTICULARLY RAIN DROPS ON A GLASS PANE
DETECTEUR POUR LA DETECTION OPTIQUE DE CORPS ETRANGERS, EN PARTICULIER DE GOUTTES DE PLUIE SUR UNE VITRE

(30) Priorität: 17.07.1999 DE 19933640
(43) Veröffentlichungstag der Anmeldung: 08.05.2002
(73) Patentinhaber: ROBERT BOSCH GMBH, 70442 Stuttgart (DE)
(72) Erfinder: SCHMITT, Patrick, D-77839 Lichtenau (DE); HOG, Norbert, D-77815 Buehl (DE); HODAPP, Bruno, D-77855 Achern-Oensbach (DE); PIENTKA, Rainer, D-77871 Renchen (DE); MEIER, Hans, D-77833 Ottersweier (DE); BLITZKE, Henry, D-77815 Buehl (DE); HAGER, Martin, D-77830 Bühlertal (DE); BURKART, Manfred, D-76473 Iffezheim (DE); BENZ, Jochen, D-89567 Sontheim (DE)
(86) Internationale Anmeldenummer: PCT/DE2000/002197
(87) Internationale Veröffentlichungsnummer: WO 2001/005636

(56) Entgegenhaltungen:
- DE-A- 4 410 217
- DE-A1- 19 746 351
- DE-A1- 19 804 165
- DE-U1- 29 906 013
- US-A- 5 543 923

## Beschreibung

### Stand der Technik

Die Erfindung geht aus von einem Sensor nach dem Oberbegriff des Hauptanspruchs. Ein Sensor mit den Merkmalen des Oberbegriffs des Anspruchs 1 ist aus der DE-A-198 04 165 bekannt. Aus der DE 44 10 217 A1 ist bereits ein Sensor mit mehreren Gehäuseteilen bekannt. Bei diesem Sensor ist eine Befestigungsvorrichtung auf eine Scheibe geklebt. Zwei in einem äußeren Gehäuseteil geführte Schieber als Befestigungsmittel bringen das äußere Gehäuseteil mit der Befestigungsvorrichtung in Eingriff. Die Sensorelemente sind an einem inneren Gehäuseteil angebracht, welches mittels einer am äußeren Gehäuseteil angreifenden Federkraft auf die Scheibe gepreßt wird. Diese Befestigungsart ist jedoch umständlich, aufwendig, störanfällig und daher mit hohen Kosten verbunden.

### Vorteile der Erfindung

Der erfindungsgemäße Sensor mit den Merkmalen des Hauptanspruchs hat den Vorteil, daß das Befestigungsteil als einfach herzustellendes Stanz-Biege-Teil ausgeformt ist und vordefiniert am Gehäuse fixiert ist. Dadurch wird bei der Montage kein separates Teil benötigt und es genügt ein Gehäuseteil, welches als ganzes gegen die Scheibe gedrückt wird. Ist das Sensorelement fest an diesem Gehäuseteil angebracht, wird die Anzahl der beweglichen Teile des Sensors reduziert, wodurch eine Dejustierung aufgrund der Erschütterungen der Scheibe, vermieden wird.

Durch zwei einander gegenüberliegende Befestigungsteile kann die Anpreßkraft des Sensors auf der Scheibenfläche gleichmäßig gehalten werden.

Die Befestigungsvorrichtung weist Zapfen zum Eingriff des Befestigungsteils auf, so daß jederzeit eine einfache Demontage des Sensors gewährleistet ist. Ist das Befestigungsteil drehbar am Gehäuse angebracht und weist federnde Eigenschaften auf, so kann die Anpresskraft genau auf die Bedürfnisse eingestellt werden. Bei der Montage ergibt sich am Befestigungsteil ein kontinuierlicher Kraftanstieg, der noch verstärkt wird, wenn beim Drehen der Feder die Kraft über eine schiefe Ebene erzeugt wird, auf der die Zapfen der Befestigungsvorrichtung abgleiten. So kann eine höhere Anpreßkraft erzielt werden, ohne daß die Montage erschwert wird.

Aussparungen im Befestigungsteil zur Aufnahme der Zapfen in montierter Position gewährleisten eine sehr hohe Erschütterungsfestigkeit.

Vorteilhafterweise weist das Befestigungsteil an seiner Außenseite eine längliche Ausformung auf. Dadurch wird das Befestigungsteil versteift und eine bessere Kraftübertragung bei der Montage bewirkt.

Die Herstellung des Befestigungsteils als Biege-Stanzteil ist extrem einfach und kostensparend.

Darüber hinaus ist die Befestigungsvorrichtung einstückig, so daß beim Aufkleben derselben auf die Scheibe nicht auf bestimmte Abstandsmaße geachtet werden, muß was eine nicht geringe Zeitersparnis bedeutet. Ein Kragen an der Befestigungsvorrichtung zur Aufnahme des Sensorgehäuses gewährleistet eine schnelle und einfache Montage.

Ein weiterer Vorteil ergibt sich aus einem modularen Aufbau des Sensors aus 3 Modulen. Das Gehäuse mit den Befestigungsteilen als erstes Modul, die Leiterplatte mit Stecker oder Buchse und den Sendern und Empfängern als zweites Modul sowie Lichtleitkörper, Koppelmedium und beispielsweise Fremdlichtsperre als drittes Modul. Dieser Aufbau ermöglicht neben einer präzisen und schnellen Montage der aufeinander abgestimmten Bauteile auch einen unkomplizierten Austausch einzelner Komponenten.

### Zeichnung

Ein Ausführungsbeispiel der Erfindung ist in den Zeichnungen dargestellt und in der nachfolgenden Beschreibung näher erläutert. Es zeigen jeweils in Schrägansicht
Figur 1 eine Sensoreinheit in einem Gehäuse mit einer Befestigungsvorrichtung vor einem Befestigungsvorgang,
Figur 2 ein Befestigungsteil in vergrößerter Darstellung,
Figur 3 eine Sensoreinheit in einem Gehäuse mit einer Befestigungsvorrichtung während einem Befestigungsvorgang und
Figur 4 eine Sensoreinheit in einem Gehäuse mit einer Befestigungsvorrichtung nach einem Befestigungsvorgang.
Figur 5 eine Sensoreinheit vor einem Befestigungsvorgang im Schnitt (nicht in Schrägansicht) und die
Figur 6 und 7 jeweils eine Ausführungsvariante für das Befestigungsteil bzw. für das Gehäuseteil des Sensors.

### Beschreibung des Ausführungsbeispiels

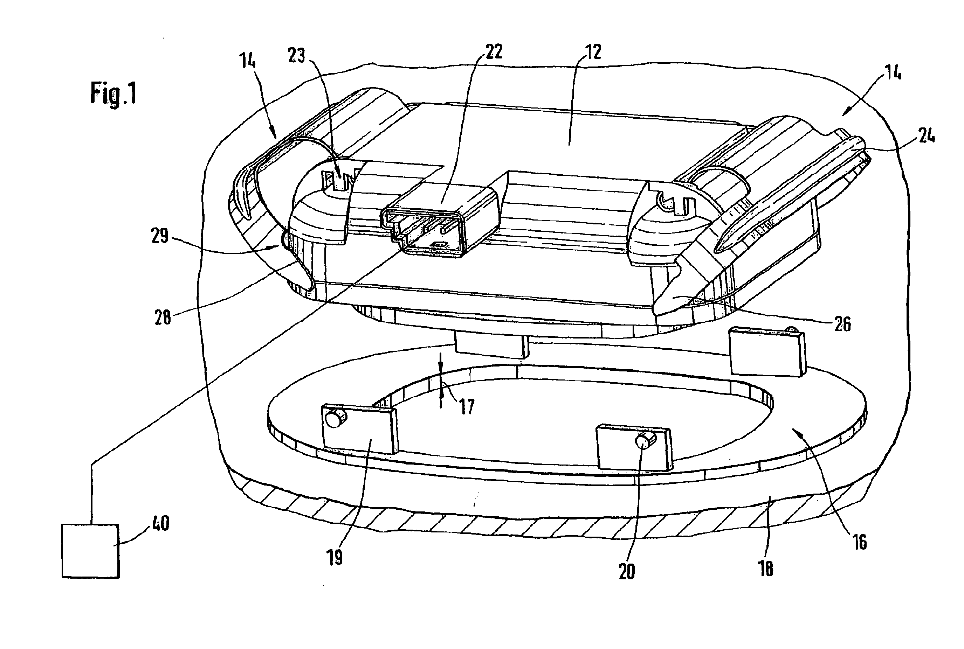

Figur 1 zeigt einen erfindungsgemäßen Sensor 10, umfassend ein Gehäuseteil 12, zwei Befestigungsteile 14 sowie eine Befestigungsvorrichtung 16.

Die Befestigungsvorrichtung 16 ist als plattenförmiges Teil mit einer mittigen Ausnehmung ausgebildet, so daß sie das Gehäuseteil 12 kragenartig aufnehmen kann. Seitlich weist die Befestigungsvorrichtung 16 Laschen 19 auf, an denen Zapfen 20 angeordnet sind, die sich seitlich auswärts erstrecken. Die Laschen 19 erstrecken sich im wesentlichen senkrecht zur Scheibe 18, wodurch die Zapfen 20 etwa parallel zur Scheibe 18 liegen. Die Befestigungsvorrichtung 16 ist auf der Innenseite einer Scheibe 18 aufgeklebt und einstückig hergestellt.

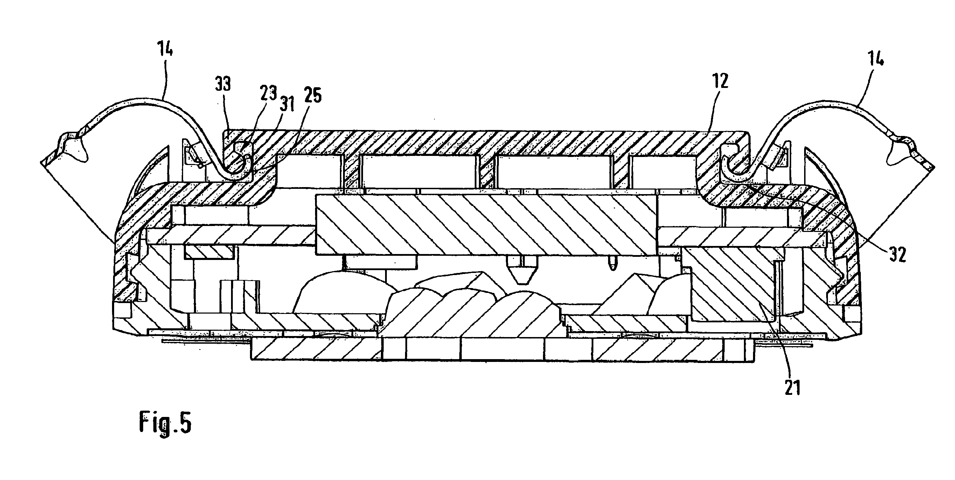

Das Gehäuseteil 12 besteht aus einem schalenförmigen Kunststoffteil an dessen Seiten sich parallel zur Scheibe 18 taschenartige Ausformungen 23 befinden, in welchen die Befestigungsteile 14 aufgenommen werden können. Ebenso weist das Gehäuseteil 12 eine Buchse 22 auf, welche als Kommunikationsschnittstelle eines Sensorelementes 21 (Figur 5) mit einer Auswerteelektronik 40 dient.

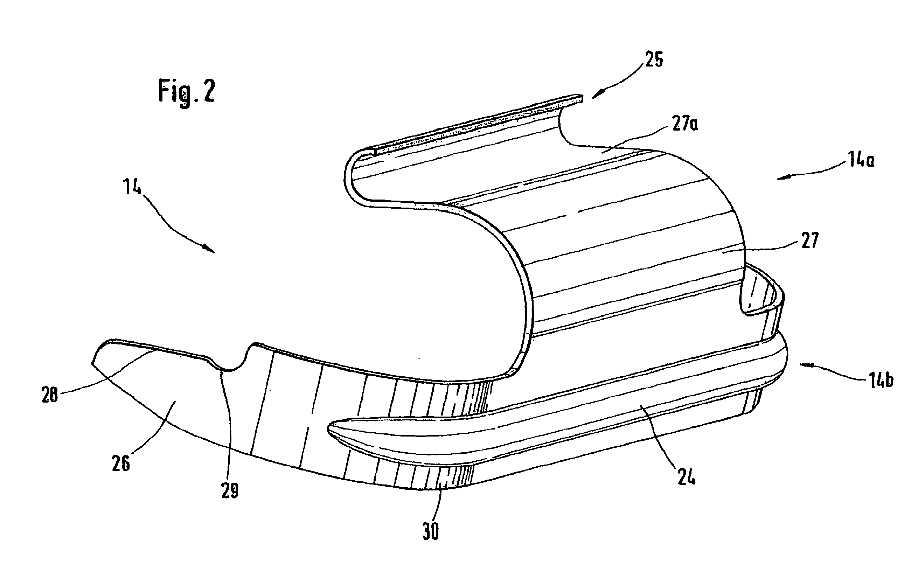

Figur 2 zeigt das Befestigungsteil 14 wie es auch in Figur 1 zu sehen ist. Das Befestigungsteil 14 ist ein im wesentlichen T-förmiges Blech-Stanzteil, bestehend aus einem Fuß-Steg 14a und einem Kopf-Steg 14b. Der Fuß-Steg 14a umfaßt 3 Abschnitte, einen gekrümten federnden Bereich 27 als erster Abschnitt, an den sich ein ebener Bereich 27a als zweiter Abschnitt anfügt. Der darauf folgende dritte Abschnitt besteht aus einer halbröhrenförmigen Biegung 25. Der federnde Bereich 27 des ersten Abschnitts ist in der entgegengesetzten Richtung wie die Biegung 25 des dritten Abschnitts gekrümmt. Der Kopf-Steg 14b, der sich an den federnden Bereich 27 des ersten Abschnitts des Fuß-Steges 14a anschließt, bildet einen Haltebügel 30, der ebenfalls drei Bereiche aufweist. Der erste, mittige Abschnitt besteht aus einem ebenen Stück, in dessen Mitte sich eine längliche Ausformung 24 befindet. An diesen Abschnitt schließt sich zu beiden Seiten ein zweiter, in Richtung der Biegung 25 gekrümmter Bereich an. Die Enden des Kopf-Stegs 14b werden durch zwei trapezförmige Bügellaschen 26 geformt und bilden so den dritten Abschnitt des Haltebügels 30. Diese Bügeltaschen 26 weisen auf der dem zweiten Bereich zugewandten Seite eine Aussparung 29 auf. Durch die Trapezform der Bügellaschen 26 ist eine schiefe Ebene 28 gebildet, welche sich in Einbaulage auf der der Scheibe 18 abgewandten Seite befindet.

In Figur 5 ist das Gehäuseteil 12 mit den Befestigungsteilen 14 und dem Sensorelement 21 im Schnitt dargestellt. Die taschenartige Ausformung 23 wird durch einen klammerartigen Überhang 33 an der der Scheibe 18 abgewandten Oberseite des Gehäuseteils 12 gebildet. Der Überhang 33 wird von einer zylindrischen Ausformung 31 abgeschlossen, in die die Biegung 25 des Befestigungsteils 14 beweglich einbringbar ist.

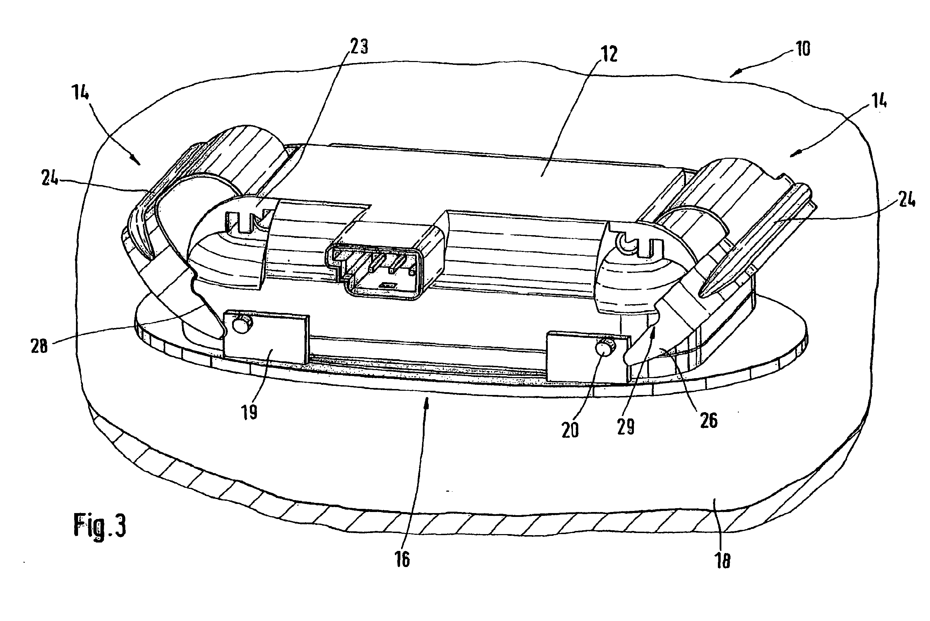

Das Zusammenwirken von Befestigungsvorrichtung 16, Gehäuseteil 12 und Befestigungsteil 14 ist in Figur 3 dargestellt und soll im Folgenden näher erläutert werden.

Die Befestigungsvorrichtung 16 ist auf der Scheibe 18 aufgeklebt. Durch das Dickenmaß 17 der Befestigungsvorrichtung 16 entsteht ein Kragen, in den das Gehäuseteil 12 eingesetzt wird. Werden die Haltebügel 30, welche mittels der Biegung 25 in den taschenartigen Ausformungen 23 des Gehäuses 12 drehbeweglich befestigt sind, in Richtung der Scheibe 18 gedrückt, so gleiten die Bügellaschen 26 an den Zapfen 20 entlang. Die Zapfen 20 gleiten daher relativ zu den Bügellaschen 26 an einer, durch die Trapezform der Bügellaschen 26 bedingten, schiefen Ebene 28 hinauf, wodurch sich die Krümmung des federnden Bereiches 27 vergrößert. Durch das Bestreben der federnden Befestigungsteile 14 die Krümmung im federnden Bereich 27 konstant zu halten, wird das Gehäuseteil 12 samt Sensorelement 21 in Richtung der Befestigungsvorrichtung 16 und damit in Richtung der Scheibe 18 gedrückt, da das Gehäuseteil 12 kragenartig in der Befestigungsvorrichtung 16 aufgenommen ist. Das Verhältnis zwischen den zylindrischen Ausformungen 31 und der halbröhrenförmigen Biegung 25 ist dabei so bemessen, daß die Kraftwirkung nicht zwischen dem Überhang 33 und der Befestigungsvorrichtung 16 sondern zwischen einer Andruckfläche 32 und der Befestigungsvorrichtung 16 zustande kommt.

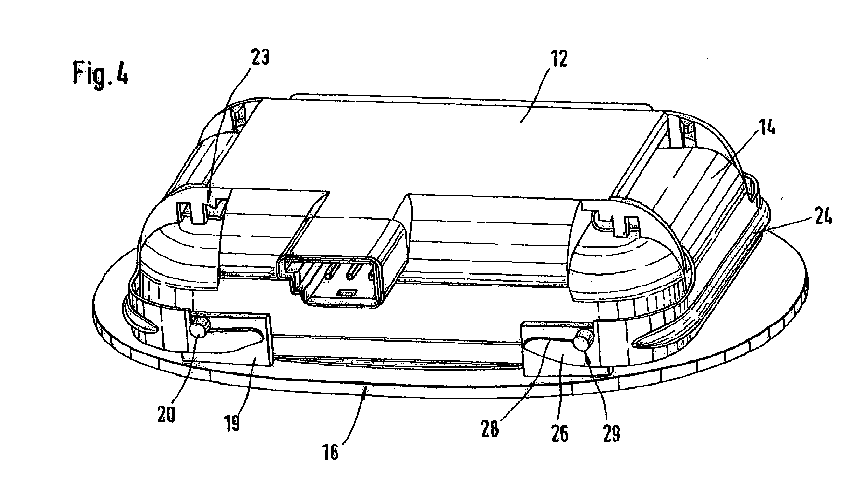

In der Endposition, wie in Figur 4 zu sehen, rasten die Zapfen 20 in die Aussparungen 29 des Befestigungsteils 14 ein.

Bei der Montage wird eine Kraft in Richtung der Scheibe 18 benötigt, um die Zapfen 20 über die schiefe Ebene 28 hinauf gleiten zu lassen. Die länglichen Ausformungen 24, bewirken dabei eine Versteifung des Befestigungsteils 14 und verhindern wirksam ein Abgleiten des Montagewerkzeugs in Richtung der Scheibe 18.

Die Befestigungsvorrichtung 16 kann in einer Variante des Ausführungsbeispiels auch mehrteilig konstruiert sein. Ebenfalls ist eine andere Befestigung als eine Klebeverbindung zwischen Befestigungsvorrichtung 16 und Scheibe 18 möglich.

Die Befestigungsteile 14 können bespielsweise auch beschichtet sein, um eine bessere Griffigkeit bei der Montage zu bewirken. Durch eine Mittelaussparung 36 im Fuß-Steg des Befestigungsteils 14 kann die Spannkraft des federnden Bereiches 27 präzise eingestellt werden.

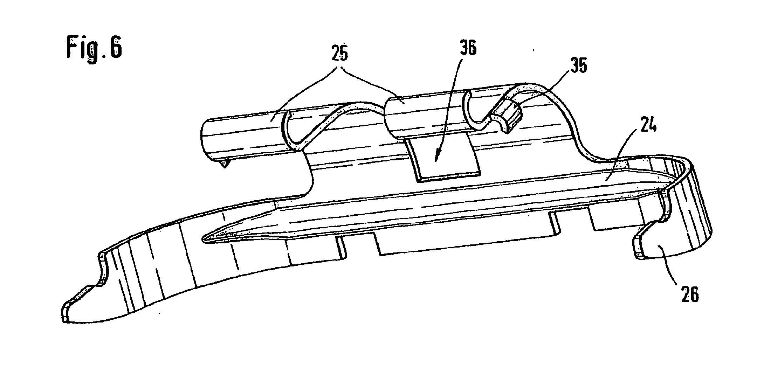

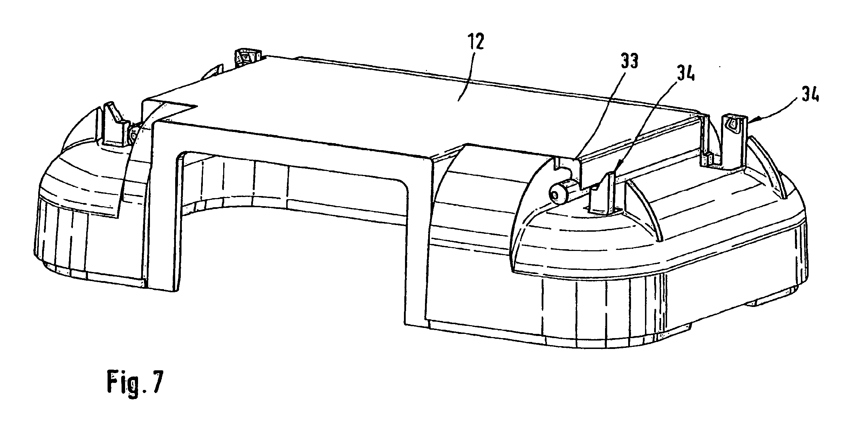

Wie in Figur 6 dargestellt, können am Fuß-Steg 14a des Befestigungsteils 14 auch Ansätze 35 angeordnet sein, welche die Befestigungsteile 14 im Lieferzustand in definierter Lage am Gehäuseteil 12 arretieren. Dazu weist, wie in Figur 7 dargestellt, das Gehäuseteil 12 Haltestege 34 auf.

Das Sensorelement 21 kann beispielsweise auch in das Sensorgehäuse 12 eingeschraubt oder im Sensorgehäuse 12 federnd befestigt sein. Ebenso kann die Buchse 22 am Sensorelement 21 befestigt sein und durch eine Aussparung im Gehäuseteil 12 verbunden werden.

## Patentansprüche

1. Sensor (10), zum optischen Erfassen von Fremdkörpern, insbesondere Regentropfen, auf einer Scheibe, insbesondere auf der Windschutzscheibe eines Kraftfahrzeugs, mit einem Sensorelement (21), das an die Innenseite der Scheibe ankoppelbar ist, mit mindestens einer einstückiger Befestigungsvorrichtung (16), die auf der Scheibe zu befestigen, vorzugsweise aufzukleben ist und mit einem Gehäuseteil (12), das zumindest das Sensorelement (21) aufnimmt, wobei das Sensorelement (21) an der Scheibe (18) mittels Federkraft ankuppelbar ist, wobei das Gehäuseteil (12) eine Kommunikationsschnittstelle des Sensorelements (21) mit einer Auswerteelektronik (40) aufweist und am Gehäuseteil (12) mindestens ein Befestigungsteil (14) angebracht ist, das mit der Befestigungsvorrichtung (16) unter Klemmspannung in Eingriff bringbar ist, so dass das Gehäuseteil (12) samt Sensorelement (21) in Richtung der Befestigungsvorrichtung (16) und damit in Richtung der Scheibe (18) gedrückt wird, **dadurch gekennzeichnet dass** das mindestens eine Befestigungsteil (14) ein Biege-Stanzteil ist und die mindestens eine Befestigungsvorrichtung (16) zum Eingriff des mindestens einen Befestigungsteils (14) Zapfen (20) aufweist.

2. Sensor nach Anspruch 1, **dadurch gekennzeichnet, daß** das Sensorelement (21) fest am Gehäuseteil (12) angebracht ist.

3. Sensor nach einem der Ansprüche 1, oder 2, **dadurch gekennzeichnet, daß** am Gehäuseteil (12) zwei einander gegenüberliegende Befestigungsteile (14) angeordnet sind.

4. Sensor nach Anspruch 1, **dadurch gekennzeichnet, daß** das mindestens eine Befestigungsteil (14) Aussparungen (29) zur Aufnahme der Zapfen (20) in montierter Position aufweist

5. Sensor nach einem der vorhergehenden Ansprüche, **dadurch gekennzeichnet, daß** das mindestens eine Befestigungsteil (14) beweglich, insbesondere drehbar am Gehäuseteil (12) angebracht ist und federnde Eigenschaft aufweist

6. Sensor nach einem der vorhergehenden Ansprüche, **dadurch gekennzeichnet, daß** das mindestens eine Befestigungsteil (14) über eine schiefe Ebene (28) mit der mindestens einen Befestigungsvorrichtung (16) in Eingriff bringbar ist.

7. Sensor nach einem der vorhergehenden Ansprüche, **dadurch gekennzeichnet, daß** das mindestens eine Befestigungsteil (14) an seiner Außenseite eine längliche Ausformung (24)aufweist.

8. Sensor nach einem der vorhergehenden Ansprüche, **dadurch gekennzeichnet, daß** das Gehäuseteil (12) kragenartig in die Befestigungsvorrichtung (16) einsetzbar ist

9. Sensor nach einem der vorhergehenden Ansprüche, **dadurch gekennzeichnet, daß** das Sensorelement (21) im Gehäuseteil (12) geclipst befestigt ist.

## Revendications

1. Détecteur (10) pour la détection optique de corps étrangers, en particulier de gouttes de pluie sur une vitre, notamment le pare-brise d'un véhicule automobile, comprenant un élément détecteur (21) qui peut être accouplé à la face interne de la vitre, au moins un dispositif de fixation (16) en une seule pièce à fixer sur la vitre, de préférence par collage, et une partie de boîtier (12) accueillant au moins l'élément détecteur (21) qui peut être accouplé à la vitre (18) par l'action d'une force élastique,
selon lequel,
la partie de boîtier (12) comprend une interface de communication de l'élément détecteur (21) avec une électronique d'exploitation (40) et sur cette partie de boîtier (12) peut être montée au moins une partie de fixation (14) qui peut être amenée en prise sous contrainte de serrage avec le dispositif de fixation (16), de sorte que la partie de boîtier (12) avec l'élément détecteur (21) est mise en pression en direction du dispositif de fixation (16) et donc en direction de la vitre (18),
**caractérisé en ce que**
au moins un élément de fixation (14), est une pièce estampée flexible, et au moins un dispositif de fixation (16), présente un ergot (20) pour la prise de la partie de fixation (14).

2. Détecteur selon la revendication 1,
**caractérisé en ce que**
l'élément détecteur (21) est fixé sur la partie de boîtier (12).

3. Détecteur selon la revendication 1 ou 2,
**caractérisé en ce que**
deux éléments de fixation (14) se faisant face sont montés sur la partie de boîtier (12).

4. Détecteur selon la revendication 1,
**caractérisé en ce que**
la partie de fixation (14) présente des évidements (29) pour accueillir l'ergot (20) en position montée.

5. Détecteur selon une des revendications précédentes,
**caractérisé en ce que**
au moins l'élément de fixation (14), est monté mobile, en particulier en rotation sur la partie de boîtier (12) et présente des propriétés élastiques.

6. Détecteur selon une des revendications précédentes,
**caractérisé en ce que**
au moins l'élément de fixation (14), peut être amené en prise par l'intermédiaire d'un plan incliné (28) avec le dispositif de fixation (16).

7. Détecteur selon une des revendications précédentes,
**caractérisé en ce que**
au moins l'élément de fixation (14), présente sur sa face externe un relief moulé longitudinal (24).

8. Détecteur selon une des revendications précédentes,
**caractérisé en ce que**
la partie de boîtier (12) peut être insérée à la manière d'un collet dans le dispositif de fixation (16).

9. Détecteur selon une des revendications précédentes,
**caractérisé en ce que**
l'élément détecteur (21) est fixé par clipage dans la partie de boîtier (12).

## Claims

1. Sensor (10) for optically detecting foreign bodies, in particular raindrops, on a pane, in particular on the windscreen of a motor vehicle, having a sensor element (21) which can be coupled to the inside of the pane, having at least one unipartite fastening apparatus (16) which is to be fastened on the pane, preferably bonded on, and having a housing part (12) which holds at least the sensor element (21), it being possible for the sensor element (21) to be coupled on the pane (18) by means of spring force, the housing part (12) having a communication interface of the sensor element (21) with an electronic evaluation system (14), and there is fitted on the housing part (12) at least one fastening part (14) which can be brought into engagement with the fastening apparatus (16) under clamping tension such that the housing part (12) together with the sensor element (21) is pressed in the direction of the fastening apparatus (16) and thus in the direction of the pane (18) **characterized in that** the at least one fastening part (14) is a bent stamped part and the at least one fastening apparatus (16) has pins (20) for engaging the at least one fastening part (14).

2. Sensor according to Claim 1, **characterized in that** the sensor element (21) is permanently fitted on the housing part (12).

3. Sensor according to one of Claims 1 and 2, **characterized in that** two fastening parts (14) opposite one another are arranged on the housing part (12).

4. Sensor according to Claim 1, **characterized in that** the at least one fastening part (14) has cutouts (29) for holding the pins (20) in a mounted position.

5. Sensor according to one of the preceding claims, **characterized in that** the at least one fastening part (14) is fitted moveably, in particular rotatably, on the housing part (12) and has a resilient property.

6. Sensor according to one of the preceding claims, **characterized in that** the at least one fastening part (14) can be brought into engagement with the at least one fastening apparatus (16) via an inclined plane (28).

7. Sensor according to one of the preceding claims, **characterized in that** the at least one fastening part (14) has an elongated shaped portion (24) on its outside.

8. Sensor according to one of the preceding claims, **characterized in that** the housing part (12) can be inserted into the fastening apparatus (16) in the manner of a collar.

9. Sensor according to one of the preceding claims, **characterized in that** the sensor element (21) is fastened in the fastening part (12) by clipping.
